Europäisches Patentamt

European Patent Office

Office européen des brevets

(11) Numéro de publication : **0 281 511 B1**

# FASCICULE DE BREVET EUROPEEN

(45) Date de publication du fascicule du brevet :
**20.05.92 Bulletin 92/21**

(51) Int. Cl.$^5$ : **B23D 25/14, // B26D7/26**

(21) Numéro de dépôt : **88810039.3**

(22) Date de dépôt : **26.01.88**

(54) **Dispositif pour sectionner un fil métallique.**

(30) Priorité : **30.01.87 CH 339/87**

(43) Date de publication de la demande :
**07.09.88 Bulletin 88/36**

(45) Mention de la délivrance du brevet :
**20.05.92 Bulletin 92/21**

(84) Etats contractants désignés :
**DE FR GB**

(56) Documents cités :
**EP-A- 0 198 229**
**FR-A- 2 212 779**
**FR-A- 2 241 377**
**GB-A- 644 111**
**GB-A- 1 000 696**
**GB-A- 2 010 160**
**JP-A-56 089 441**

(56) Documents cités :
**JP-A-57 061 422**
**JP-A-57 061 423**
**US-A- 2 265 649**
**US-A- 3 677 122**
**US-A- 3 828 637**
**US-A- 4 556 607**
**US-D- 4 016 395**

(73) Titulaire : **CHARMILLES TECHNOLOGIES S.A.**
**8-10, rue du Pré-de-la-Fontaine Zone**
**industrielle de Satigny**
**CH-1217 Meyrin 1 (CH)**

(72) Inventeur : **Briffod, Jean-Paul**
**Les Carelines chez Degradaz**
**F-74380 Lucinges (FR)**

(74) Mandataire : **Hugelin, Christiane**
**c/o CHARMILLES TECHNOLOGIES SA Case**
**postale 373**
**CH-1217 Meyrin 1 (CH)**

EP 0 281 511 B1

## Description

L'invention se rapporte à un dispositif pour sectionner un fil métallique, en particulier pour tronçonner, pour hacher en menus morceaux le fil-électrode usagé évacué par une machine à découper par électroérosion. Les propriétés mécaniques et électrostatiques du fil-électode usagé, généralement réalisé en cuivre ou par une stratification de cuivre et/ou de laiton sur une âme d'acier, font que celui-ci possède une forte tendance à foisonner dans le récipient dans lequel on tente de le stocker, ce qui nécessite l'intervention fréquente d'un opérateur pour tasser le fil parce que celui-ci forme un enchevêtrement très peu dense qui occupe rapidement tout l'espace disponible dans le récipient.

En effet, le fil étant évacué à une certaine vitesse (actuellement entre 7 et 14 m/min environ) ceci conduit, si on veut obtenir un fonctionnement automatique durant tout un week-end, par exemple, à stocker en moyenne 37 km de fil sans intervention humaine. Il est donc indispensable de le compacter. Mais aucun dispositif satisfaisant de compactage sans intervention humaine n'est connu à ce jour, et ceci empêche une marche autonome des machines EDM à découper par fil.

Il est connu de friser le fil-électrode en le faisant passer entre deux roues dentées, ou encore de le tronçonner en petits morceaux capables de s'accumuler en un tas relativement dense. Des dispositifs de ce genre sont décrits dans les brevets US 4.016.395, GB 2.010.160, DE 35 11 930, JP 56-89441 (A), JP 57-61422, JP 57-61423 qui tous ont trait au domaine de l'électroérosion. Dans les deux premiers de ces brevets, des outils de coupe montés sur un organe rotatif sectionnent le fil contre une enclume ne présentant pas la forme d'un volume de révolution, de surface plane ou concave, et immobile par rapport au fil, ce qui conduit à une usure rapide des couteaux, en particulier lorsqu'on tronçonne des fils-électrode difficiles à sectionner, comme par exemple les fils composés de cuivre et de zinc. Les couteaux devenant inopérants, et en l'absence d'un opérateur, le fil s'accumule, finit par empêcher le défilement normal et provoque des courts-circuits et la détérioration de l'usinage.

Les brevets suivants utilisent des enclumes rotatives, plus avantageuses à cet égard. Mais le dispositif décrit dans le brevet DE 35 11 930 nécessite un palier flottant monté sur une structure compliquée avec ressort et bras oscillant, pour obtenir l'élasticité nécessaire entre l'outil et l'enclume. Dans le dispositif décrit dans les brevets JP 56-89441, JP 57-61422 et JP 57-61423, cette élasticité est obtenue par une configuration particulière des outils de coupe. Mais ceci complique la forme des outils et exige qu'ils soient tous alignés avec une tolérance très stricte puisqu'il s'agit de tronçonner un fil n'ayant que quelques dixièmes de millimètres de diamètre. Si donc un outil est légèrement en retrait par rapport aux autres il ne sectionnera pas le fil; et si au contraire il dépasse l'alignement il abîmera l'enclume ou enfoncera des morceaux de fil dans celle-ci si elle n'est pas faite d'un matériau extrêmement dur. C'est d'ailleurs pourquoi une brosse rotative est prévue pour débarasser l'enclume des morceaux de fil coupés qui s'y sont incrustés. Signalons également, bien qu'ils ne soient pas conçus pour tronçonner un fil métallique, les dispositifs à couteaux et enclume rotatifs des brevets suivants : US 3.677.122 qui concerne un procédé de coupe continue (et non discontinue comme dans la présente invention où il s'agit de tronçonner un fil) avec des couteaux annulaires dont le tranchant est disposé parallèlement au sens de défilement d'un ruban afin d'entailler longitudinalement ce dernier, et qui décrit une enclume présentant une élasticité radiale; US 3.828.637 et GB 1 000 696 qui ont trait à des dispositifs avec des enclumes rotatives ne présentant pas d'élasticité radiale mais qui décrivent des outils rotatifs qui pourraient éventuellement être utilisés dans la présente invention.

L'objet de la présente invention est un dispositif pour sectionner en de nombreux tronçons un fil métallique animé d'une vitesse linéaire imposée par un mécanisme d'entraînement placé en amont, sans perturber cette dernière. Il comporte deux organes rotatifs d'axes parallèles et tournant en sens inverse, entre lesquels défile le fil. La périphérie de l'un jouant le rôle d'enclume tandis que celle de l'autre joue le rôle d'outil et porte au moins un couteau dont le tranchant est disposé parallèlement aux axes de rotation de ces organes, tandis que sa vitesse de rotation est asservie à la vitesse linéaire du fil en amont. L'enclume est constituée par une bague cylindrique, enserrant au moins un anneau élastique disposé autour d'un corps central cylindrique et solidaire de l'arbre de rotation, de manière à présenter une faible inertie autour d'un support radialement élastique et coaxial à l'arbre de rotation.

Des moyens sont agencés pour entraîner l'outil en rotation avec une vitesse périphérique sensiblement égale à la vitesse linéaire du fil ou n'en diffèrant que d'une valeur inférieure à une limite donnée, par exemple de 10%.

Ce dispositif est de construction simple et robuste, de fonctionnement économique, ne conduit pas à une usure rapide des couteaux et permet d'obtenir une pression élastique des couteaux sur l'enclume, ces derniers présentant une configuration et un montage simple sur l'outil. Ceci permet de les remplacer facilement et rapidement une fois qu'ils sont émoussés, sans que cela nécessite un réglage compliqué. L'enclume peut être constituée par une bague enserrant au moins un anneau élastique entourant un corps central cylindrique et solidaire de l'arbre de rotation. On obtient ainsi une pression élastique de l'outil sur l'enclume même lorsque les paliers des deux organes rotatifs restent immobiles durant le fonctionnement du hachoir. Manifestement, ceci simplifie notablement la construction par rapport aux solutions connues. De plus, comme soit l'outil, soit l'enclume, soit les deux subissent une brusque accélération au moment où ils frappent l'un contre l'autre, il est utile dans l'intérêt de la longévité que la partie élastiquement suspendue ait une faible inertie, ce que l'invention favorise en suspendant élastiquement uniquement l'enclume et non tout un organe rotatif comme c'est le cas dans les dispositifs à suspension élastique connus.

La forme de réalisation mentionnée ci-dessus ,où l'enclume est une bague reposant sur deux anneaux élastiques maintenus dans des rainures, permet en outre de remplacer aisément et à peu de frais l'enclume lorsqu'elle est usée.

L'invention sera maintenant illustrée par la description d'un mode d'exécution et à l'aide du dessin, dans lequel

– la figure 1 représente une vue en coupe simplifiée d'un dispositif selon l'invention, et
– la figure 2 représente une coupe selon II-II de la figure 1.

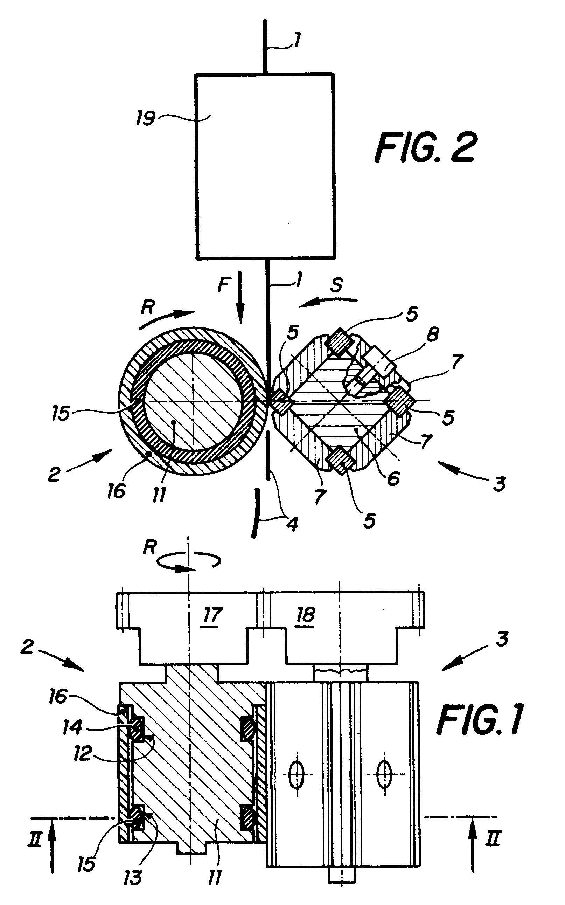

Dans les deux figures, les mêmes pièces portent les mêmes chiffres de référence, et ces figures seront décrites simultanément. Le chiffre 1 désigne le fil usagé qu'il s'agit de hacher menu, et qui, pour la clarté du dessin, n'est représenté qu'à la figure 2. Ce fil, qui sera en général évacué d'une machine à électroérosion (non représentée), progresse dans la direction de la flèche F et passe entre les organes rotatifs 2 et 3 pour être sectionné en petits morceaux 4 qui tomberont dans un récipient adéquat (également non représenté). Les corps rotatifs 2 et 3 tournent en sens inverse, comme indiqué par les flèches R et S. Pour la clarté du dessin, celui-ci ne montre ni les axes des organes 2 et 3, ni les palliers dans lesquels ils tournent. Comme on le voit particulièrement bien sur la figure 2, l'organe rotatif 3 comporte un corps central 6 sur lequel quatre outils tranchants 5 sont maintenus au moyen de quatre brides 7, elles-mêmes fixées sur le corps 6 par des vis 8, dont une seule est visible sur la figure 2.

Chaque outil 5 a la forme d'un prisme allongé à section carrée dont une arête longitudinale forme le tranchant actif. Lorsqu'un tranchant est émoussé, l'outil correspondant peut être facilement démonté, puis remonté après lui avoir fait effectuer un quart de tour autour de son axe longitudinal. Cette opération met en service un nouveau tranchant à peu de frais, et l'opération peut être répétée trois fois dans le cas des prismes carrés de la figure 2. De tels prismes se trouvent aisément dans le commerce. On remarquera toutefois qu'il peut y avoir avantage selon les cas à utiliser d'autres configurations à symétrie de révolution telles des prismes à base triangulaire, par exemple, ou à base polygonale avec un nombre de côtés supérieur à quatre. Cette dernière variante augmente le nombre de tranchants par outil et peut être aisément réalisée parce que le dispositif selon l'invention autorise des tranchants ayant un angle d'ouverture soit aigu, soit obtu. Cette dernière variante, parfois très économique, est réalisable parce que l'invention fonctionne efficacement même lorsque le tranchant de l'outil présente un profil arrondi. Si l'on désire néanmoins disposer d'un grand nombre de tranchants à angle d'ouverture aigu, on pourra utiliser un prisme avec plus de quatre arêtes et des faces concaves. Les couteaux seront réalisés de préférence en carbure de tungstène ou en un matériau revêtu de nitrure de tungstène.

L'organe rotatif 2 comporte un moyeu 11, dans lequel sont creusées deux rainures 12, 13. Des anneaux de caoutchouc 14, 15 sont placés dans l'une, respectivement l'autre de ces rainures et un cylindre 16 formant enclume est engagé à force sur ces anneaux qui le maintiennent de manière élastique. A cet effet le diamètre intérieur du cylindre 16 est légèrement supérieur au diamètre extérieur du moyeu 11. On peut aisément choisir les matériaux formant les anneaux 14, 15 et l'enclume 16 de façon à ce que le coefficient de frottement entre ces pièces soit suffisant pour maintenir l'enclume en place par friction, sans autre moyen de fixation. Ceci permet d'échanger économiquement une enclume contre une autre, soit lorsque la première est usagée, soit lorsque le passage d'un fil à un autre nécessite une modification de l'épaisseur et/ou du matériau de l'enclume.

Les vitesses de rotation des organes 2 et 3 sont de préférence synchronisées, en particulier à la vitesse de défilement du fil. Il peut aussi être avantageux de monter le porte-enclume de manière à ce qu'il tourne fou et de ne synchroniser que la vitesse de rotation du porte-couteau avec la vitesse linéaire du fil. Parmi les nombreux moyens utilisables pour synchroniser les rotations R et S, la figure 1 montre une paire de roues dentées 17 et 18 en prise réciproque et dont chacune est solidaire d'un des deux organes rotatifs 2 et 3. Dans un mode d'exécution préféré, ces roues dentées auront un nombre de dents différent, afin de tourner à des vitesses angulaires différentes. Dans la réalisation la plus simple, le nombre de dents des deux roues dentées différera d'une unité afin que les outils 5 viennent le moins souvent possible toucher l'enclume au même endroit de façon à répartir au maximum l'usure qu'elle subit. A cet effet, il peut d'ailleurs être avantageux de remplacer l'engrenage décrit ici par une transmission à friction dont le glissement inévitable et l'usure permet d'éviter presque entièrement une répétition périodique des mêmes positions relatives des deux organes rotatifs, et donc une usure préférentielle à certains emplacements de l'enclume. La rotation simultanée des deux organes est commandée par un mécanisme connu, non représenté au dessin. En général, la vitesse de cette rotation sera asservie d'une manière également connue par l'homme du métier à la vitesse d'avance du fil en amont du hachoir, de façon à assurer que la vitesse d'entraînement de la partie du fil pincée entre un couteau et l'enclume soit égale à ladite vitesse linéaire en amont. Cette vitesse est imposée par un mécanisme d'entraînement 19 placé immédiatement en amont des organes mobiles 2 et 3. Dans le cas d'une machine EDM à découper, le rôle de ce mécanisme 19 est de tirer sans à-coup le fil 1 à travers toute la machine depuis une bobine d'alimentation, ce qui implique de surmonter d'importantes forces de frottement; un exemple de réalisation d'un tel mécanisme est décrit dans le brevet US 3.912.898.

Il est essentiel que la vitesse périphérique des tranchants actifs de l'outil 3 soit proche de la vitesse linéaire imposée au fil par le mécanisme 19. En effet si cette vitesse périphérique est plus faible que ladite vitesse linéaire, il y a risque d'accumulation du fil en amont du hachoir, et si elle lui est supérieure, les tranchants exercent une action d'entraînement dont les à-coup indésirables se répercutent en amont, ce qui est particulièrement néfaste dans une machine à découper par électroérosion, car toute irrégularité dans la traction exercée sur le fil fait vibrer celui-ci et provoque des défauts géométriques tels que stries sur la pièce à usiner. Le dispositif selon l'invention permet de tronçonner le fil-électrode et de l'entasser sous forme compacte dans un récipient adéquat, sans perturber le fonctionnement d'une machine EDM à découper.

Bien que dans le mode de réalisation décrit ici, seule l'enclume soit maintenue de manière élastique par rapport à l'axe autour duquel elle tourne, tandis que les couteaux restent à distance fixe de l'axe de rotation de l'outil, on voit immédiatement la possibilité d'un montage où les couteaux sont maintenus de manière élastique par rapport à l'axe de rotation de l'outil. Ce montage peut se faire de manière exactement analogue à celle décrite ci-dessus pour l'enclume, c'est-à-dire en enfilant une bague portant les couteaux sur un ou plusieurs anneaux élastiques. Il est aussi possible de prévoir des moyens permettant de faire varier la distance entre les arbres de rotation du porte-enclume et du porte-outil. Ceci permet, en particulier, de régler la pression des couteaux sur l'enclume, en s'adaptant, par exemple, à divers diamètres ou diverses duretés du fil à sectionner.

## Revendications

1. Dispositif pour sectionner en de nombreux tronçons (4) un fil métallique (1) animé d'une vitesse linéaire imposée par un mécanisme (19) d'entraînement placé en amont, sans perturber cette dernière, comportant deux organes rotatifs (2,3) d'axes parallèles et tournant en sens inverse, entre lesquels défile le fil (1), la périphérie (16) de l'un (2) jouant le rôle d'enclume tandis que celle de l'autre (3) joue le rôle d'outil et porte au moins un couteau (5) dont le tranchant est disposé parallèlement aux axes de rotation de ces organes (2,3), la vitesse de rotation de cet organe (3) étant asservie à la vitesse linéaire du fil en amont, caractérisé par une enclume (16) constituée par une bague cylindrique, enserrant au moins un anneau élastique (14, 15) disposé autour du corps central (11) de l'organe (2), ce corps (11) étant cylindrique et solidaire de l'arbre de rotation de cet organe (2).

2. Dispositif selon la revendication 1, dans lequel au moins un anneau élastique (14, 15) est disposé dans une rainure circulaire ménagée autour du corps central (11), et l'enclume (16) est engagée à force sur cet anneau (14,15) de manière à être maintenue en place simplement par friction , sans autre moyen de fixation.

3. Dispositif selon la revendication 1, dans lequel le corps central (11) tourne fou.

4. Dispositif selon la revendication 1, dans lequel l'outil (3) est un porte-couteaux monté autour d'au moins un anneau élastique en direction radiale et reposant sur un corps central (6) cylindrique et solidaire de l'arbre de rotation de cet outil (3).

5. Dispositif selon la revendication 1, dans lequel l'outil (3) présente au moins un couteau (5) monté de façon à présenter une élasticité radiale.

6. Dispositif selon la revendication 1, présentant de plus des moyens (17, 18) aptes à entraîner en rotation l'organe (2) en synchronisme avec l'organe (3).

7. Dispositif selon la revendication 1, présentant de plus des moyens aptes à faire varier la distance entre les axes des deux organes (2,3).

8. Dispositif selon la revendication 1, présentant un couteau (5) amovible et en forme de volume de révolution.

9. Dispositif selon la revendication 8, dans lequel le couteau (5) a la forme d'un prisme à base polygonale, possédant par exemple quatre arêtes latérales ou dont les arêtes ont un angle d'ouverture supérieur à 90°.

10. Dispositif selon la revendication 8, dans lequel le couteau (5) a la forme d'un prisme dont les faces latérales sont concaves.

11. Dispositif selon la revendication 1, dans lequel le couteau (5) est en carbure de tungstène .

12. Dispositif selon la revendication 1, dans lequel le couteau (5) est en céramique.

13. Dispositif selon la revendication 1, dans lequel le couteau (5) est revêtu d'une couche résistant à l'usure, par exemple du nitrure de tungstène.

## Patentansprüche

1. Vorrichtung zum Ablängen von zahlreichen Abschnitten (4) eines metallischen Drahtes (1), der mit einer linearen Geschwindigkeit angetrieben wird, die von einem Antriebsmechanismus (19) bewirkt wird, der vorher angeordnet ist, ohne diese letztere zu stören, umfassend zwei drehbare Organe (2, 3) mit parallelen Achsen, die sich gegensinnig drehen und zwischen denen der Draht (1) läuft, wobei der Umfang des einen Organs (2) die Rolle eines Amboß spielt, während der Umfang des anderen Organs (3) die Rolle eines Werkzeugs spielt und wenigstens ein Messer (5) trägt, dessen Schneide parallel zu den Rotationsachsen dieser Organe (2, 3) angeordnet ist, wobei die Rotationsgeschwindigkeit dieses Organs (3) entsprechend der Lineargeschwindigkeit des Drahtes stromauf gesteuert ist, **gekennzeichnet** durch einen Amboß (16), der durch einen zylindrischen Ring gebildet wird, der wenigstens einen elastischen Ring (14, 15) umgreift, der um den Zentralkörper (11) des Organs (2) herum angeordnet ist, wobei dieser Körper (11) zylindrisch und fest an der Drehwelle dieses Organs (2) ist.

2. Vorrichtung nach Anspruch 1, bei der wenigstens ein elastischer Ring (14, 15) in einer kreisförmigen Nut angeordnet ist, die um den zentralen Körper (11) herum ausgespart ist, und der Amboß (16) kraftschlüssig auf diesem Ring (14, 15) derart angeordnet ist, daß er einfach durch Reibung ohne andere Befestigungsmittel an seinem Platz gehalten wird.

3. Vorrichtung nach Anspruch 1, bei der der zentrale Körper (11) freilaufend ist.

4. Vorrichtung nach Anspruch 1, bei der das Werkzeug (3) ein Messerträger ist, der über wenigstens einen elastischen Ring in radialer Richtung montiert ist und auf einem zentralen Körper (6) ruht, der zylindrisch und fest mit der Drehwelle dieses Werkzeugs (3) ist.

5. Vorrichtung nach Anspruch 1, bei der das Werkzeug (3) wenigstens ein Messer (5) aufweist, das derart montiert ist, daß es eine radiale Elastizität aufweist.

6. Vorrichtung nach Anspruch 1, des weiteren Mittel aufweisend, die geeignet sind, das Organ (2) in Synchronisation mit dem Organ (3) zur Drehung anzutreiben.

7. Vorrichtung nach Anspruch 1, des weiteren Mittel aufweisend, die geeignet sind, um den Abstand zwischen den Achsen der beiden Organe (2, 3) zu verändern.

8. Vorrichtung nach Anspruch 1, umfassend ein auswechselbares Messer (5) in Form eines Drehvolumens.

9. Vorrichtung nach Anspruch 8, bei der das Messer (5) die Form eines Prismas mit polygonaler Basis hat, die beispielsweise vier Seitenkanten aufweist oder deren Seitenkanten einen Öffnungswinkel größer 90° haben.

10. Vorrichtung nach Anspruch 8, bei der das Messer (5) die Form eines Prismas hat, dessen Seitenflächen konkav sind.

11. Vorrichtung nach Anspruch 1, bei der das Messer (5) aus Wolframkarbid ist.

12. Vorrichtung nach Anspruch 1, bei der das Messer (5) aus Keramik ist.

13. Vorrichtung nach Anspruch 1, bei der das Messer (5) mit einer gegen Verschleiß widerstandsfähigen Schicht beispielsweise aus Wolframnitrid bedeckt ist.

## Claims

1. Device for providing numerous cut sections (4) of a metallic wire (1) moving with a linear speed given by an upstream driving unit (19), without to disturb said speed, comprising two rotating means (2, 3) with parallel axes and which rotate in opposing directions, between which the wire (1) is translating, the periphery (16) of one (2) of said member playing the role of an anvil, whereas the periphery of the other (3) has the role of the tool and bears at least one blade (5), whereby the cutting edge of said blade (5) is parallel to the axis of rotation of said members (2, 3), the rotation speed of said means (3) being shaved to the linear speed of the wire upstream, caracterised by an anvil (16) constituted by a cylindrical sleeve surrounding at least one elastic ring (14, 15) encompassing the central cylindrical core (11) of said means (2), said core (11) being cylindrical and solidly mounted on the axis of rotation of said means (2).

2. Device according to claim 1, in which at least one elastic ring (14, 15) is mounted in a circumferential groove provided around said central core (11), and in which said anvil (16) is maintained in place simply by friction, without any other fixation means.

3. Device according to claim 1, in which said central core (11) turns freely.

4. Device according to claim 1, in which said tool (3) is a blade-holder mounted around at least one ring made of radially elastic material which surrounds a central cylindrical core (6) which is solidly mounted on the axis of rotation of said tool (3).

5. Device according to claim 1, in which said tool (3) presents at least one blade (5) mounted in such a manner as to present a radially elasticity.

6. Device according to claim 1, provided also with means (17, 18) adapted for driving synchroneously the rotation of (2) with means (3).

7. Device according to claim 1, provided also with means adapted for varying the distance between the axis of said two means (2, 3).

8. Device according to claim 1, provided with a detachable blade (5) which has the shape of a volume of revolution.

9. Device according to claim 1, in which said blade (5) is in the form of a prism with a polygonal shaped base, for example showing four lateral edges of which the intersecting angles are greater than ninety degrees.

10. Device according to claim 1, in which said blade (5) is in the form of a prism the lateral facets of which are concave.

11. Device according to claim 1, in which said blade (5) is made of carbide of tungsten.

12. Device according to claim 1, in which said blade (5) is made of ceramic.

13. Device according to claim 1, in which said blade (5) is coated with a wear-resistant film, for example of nitride of tungsten.

*FIG. 2*

*FIG. 1*